# EUROPEAN PATENT APPLICATION

(11) **EP 4 564 646 A1**
(43) Date of publication of application: **04.06.2025**
(21) Application number: 24205299.1
(22) Date of filing: 08.10.2024
(51) Int. Cl.: H02J 7/00

(54) **INRUSH CURRENT REGULATION IN A BATTERY CHARGER TOPOLOGY**

(30) Priority: 29.11.2023 US 202318522943
(71) Applicant: INTEL Corporation, Santa Clara, CA 95054 (US)
(72) Inventor: VENKATARAYAPPA, Manjunatha, Santa Clara, CA 95054 (US); VANKUNAVATH, Ramesh, Bengaluru (IN); KOTAKONDA, Venkataramana, 560087 Bengaluru, Karnataka (IN); VENUGOPAL, Nandish, Santa Clara, CA 95054 (US); CHAUHAN, Shailendra Singh, 560066 Bengaluru, Karnataka (IN); GUNNAM, Venkata Mahesh, 533234 Yeditha, Mandapeta, East Godavari, Andhra Pradesh (IN)
(74) Representative: Viering, Jentschura & Partner mbB Patent- und Rechtsanwälte

(57) **Abstract**

The disclosed techniques include reducing inrush current due to the bulk capacitance by pre-charging the bulk capacitance using a charge from a battery provided by a battery charging circuit. An example apparatus includes a switching circuit with an input terminal and an output terminal. The input terminal of the switching circuit is coupled to a power adapter. The apparatus includes a battery charging circuit with a first terminal and a second terminal. The first terminal of the battery charging circuit is coupled to the output terminal of the switching circuit. The second terminal of the battery charging circuit is coupled to a battery. The apparatus includes a bypass circuit with an input terminal and an output terminal, with its input terminal coupled to the output terminal of the switching circuit and the first terminal of the battery charging circuit. The apparatus includes a bulk capacitor coupled to the bypass circuit.

## Description

### BACKGROUND

Type-C connector-based adapters can support up to 240W (48V/5A) power in mobile workstation platforms. However, existing battery charger topologies are associated with some inefficiencies, including adapter voltage droop and a large inrush current caused by bulk capacitance at the system side. Such inrush current can cause transistor failure and difficulty in meeting the safe operating area (SOA) of the topology transistors.

### BRIEF DESCRIPTION OF THE DRAWINGS

In the drawings, like numerals may describe the same or similar components or features in different views. Like numerals having different letter suffixes may represent different instances of similar components. Some embodiments are illustrated by way of example, and not limitation, in the figures of the accompanying drawings in which:
FIG. 1 illustrates a block diagram of a hybrid power buck boost (HPBB) charger topology, in accordance with some embodiments;
FIG. 2 is a graph of a safe operating area (SOA) curve of a transistor used in a bypass circuit of the HPBB charger topology of FIG. 1, in accordance with some embodiments;
FIG. 3 illustrates a block diagram of an HPBB charger topology using reverse boosting of a bulk capacitor, in accordance with some embodiments;
FIG. 4 illustrates a block diagram of the HPBB charger topology of FIG. 3 with an open sink path and activated battery charging after the reverse boosting of the bulk capacitor, in accordance with some embodiments;
FIG. 5 illustrates graphs of capacitor charge voltage and current;
FIG. 6 is a flow diagram of an example method of operation of the HPBB charger topology of FIG. 3, in accordance with some embodiments;
FIG. 7 is a swimlane diagram of an example method of operation of the HPBB charger topology of FIG. 3, in accordance with some embodiments;
FIG. 8 illustrates a block diagram of an HPBB charger topology using a voltage converter and reverse boosting of a bulk capacitor, in accordance with some embodiments;
FIG. 9 illustrates a block diagram of the HPBB charger topology of FIG. 8 with an open sink path and activated battery charging after the reverse boosting of the bulk capacitor, in accordance with some embodiments;
FIG. 10 is a flow diagram of an example method for inrush current regulation in a battery charger topology, in accordance with some embodiments; and
FIG. 11 illustrates a block diagram of an example machine upon which any one or more of the operations/techniques (e.g., methodologies) discussed herein may perform.

### DETAILED DESCRIPTION

The following detailed description refers to the accompanying drawings. The same reference numbers may be used in different drawings to identify the same or similar elements. In the following description, for purposes of explanation and not limitation, specific details are set forth, such as particular structures, architectures, interfaces, techniques, etc., to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail.

The following description and the drawings sufficiently illustrate specific embodiments to enable those skilled in the art to practice them. Other embodiments may incorporate structural, logical, electrical, process, and other changes. Portions and features of some embodiments may be included in or substituted for those of other embodiments. Embodiments outlined in the claims encompass all available equivalents of those claims.

As used herein, the term "chip" (or die) refers to a piece of a material, such as a semiconductor material, that includes a circuit, such as an integrated circuit or a part of an integrated circuit. The term "memory IP" indicates memory intellectual property. The terms "memory IP," "memory device," "memory chip," and "memory" are interchangeable.

The term "a processor" configured to carry out specific operations includes both a single processor configured to carry out all of the operations (e.g., operations or methods disclosed herein) as well as multiple processors individually configured to carry out some or all of the operations (which may overlap) such that the combination of processors carry out all of the operations.

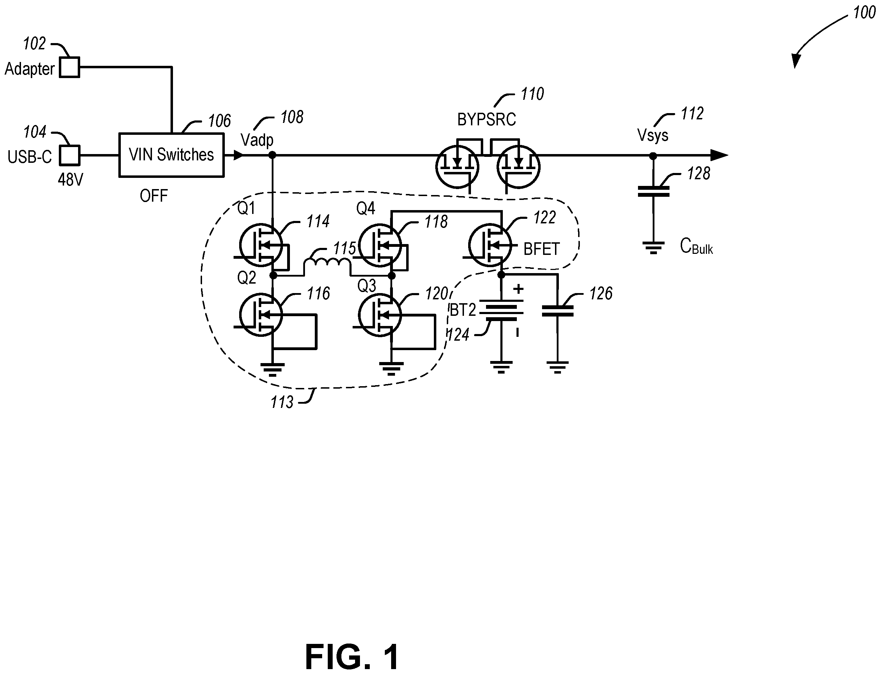

FIG. 1 illustrates a block diagram of a hybrid power buck boost (HPBB) charger topology 100, in accordance with some embodiments. HPBB is a battery charger topology on client platforms and is an alternative to Narrow Voltage DC (NVDC) chargers. The HPBB charger topology is more efficient than the NVDC charger topology since it directly connects the system load to the adapter voltage line, which makes it preferable in high-power systems.

Referring to FIG. 1, the HPBB charger topology 100 includes an adapter 102, a USB-C port 104, a switching circuit 106 (e.g., voltage input (VIN) switches), a bypass circuit 110, a battery charging circuit 113, a battery 124, a battery capacitor 126, and a bulk capacitor 128. In some aspects, the battery charging circuit 113 includes an inductor 115 and a plurality of field-effect transistors (FETs) such as FETs 114, 116, 118, 120, and 122. The voltage at the adapter side can be designated as Vadp 108, and the voltage at the system side close to the bulk capacitor 128 can be designated as Vsys 112.

Given that in the HPBB charger topology 100, adapter 102 is directly connected to the system-side load and input side capacitance (C-bulk or bulk capacitor 128), the adapter being used on such systems is preferably configured to support high inrush currents. Currently, mobile workstation category laptops (also known as "muscle books") are being shipped with DC-barrel connector-based adapters, rated 300W and higher, which support these demanding inrush currents for this topology. However, with the advent of USB-C PD3.1 Extended Power Range (EPR) technology, Type-C connector-based adapters can now support up to 240W (48V/5A) power.

However, the USB-C PD3.1 Specification constraints the maximum allowed inrush currents on the Type-C adapter to 10uF before the negotiation and 100uF after the power contract negotiation. Parameter CSnkBulk indicates the sink bulk capacitance on Vbus at attachment and prior to establishing an explicit contract. Parameter CSnkBulkPd indicates the bulk capacitance on Vbus after a successful negotiation.

CSnkBulk (10uF) inrush limit before contract negotiation can be met by having the VIN switches (at the adapter power input), which can be turned ON and OFF by an embedded controller (EC) and/or a power delivery controller (PDC). In some aspects, the VIN switches (e.g., the switching circuit) can hide the bulk capacitance (C-bulk) to the adapter until a proper power contract is established. However, the CSnkBulkPd (100uF) requirement cannot be met on an HPBB charger topology since the system VR input side capacitance will be higher than the 100uF limit.

A second challenge to existing charger topologies is meeting the safe operating area (SOA) of the VIN switches and the source bypass (e.g., the bypass circuit, also referred to as BYPSRC) transistors (e.g., FETs or MOSFETs). Whenever these MOSFETs are turned ON, since the input is raised to 48V and the output side is at 0V, the voltage difference and the inrush current during the OFF to ON transition can damage the transistors. In aspects when the system is running on battery power and the Type-C charger is connected, the system load will at once switch from battery to Type-C adapter. The battery then goes into charging mode, thus demanding full 5A current from the adapter, and the C-bulk capacitance further raises the inrush current, thus causing a voltage droop on the adapter and consecutive failures.

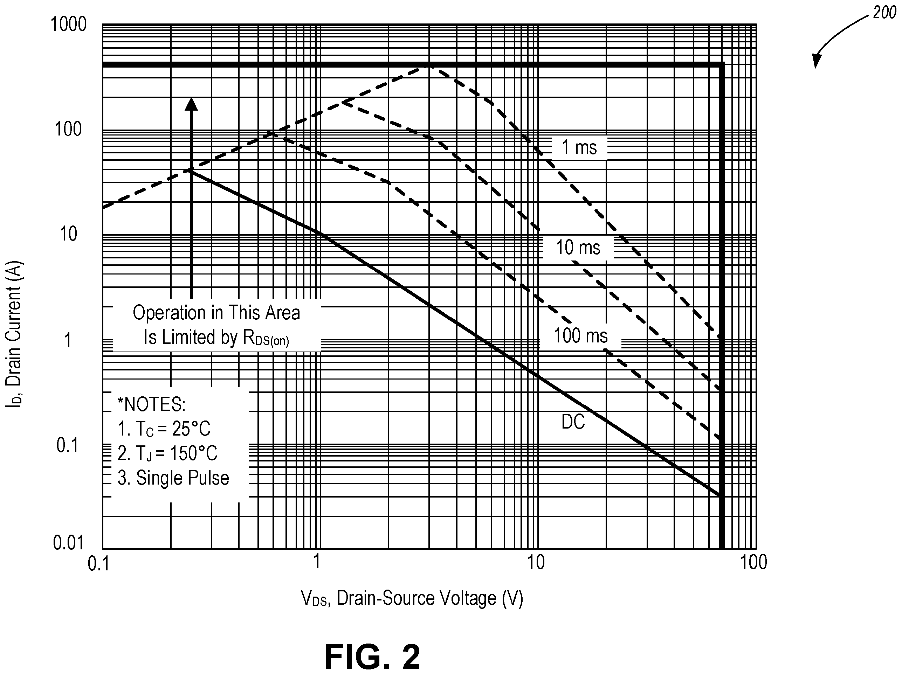

FIG. 2 is a graph 200 of a safe operating area (SOA) curve of a transistor used in a bypass circuit of the HPBB charger topology of FIG. 1, in accordance with some embodiments. Although graph 200 illustrates a typical SOA curve, the disclosure is not limited to the particular SOA curve and values illustrated in FIG. 2. For example, other MOSFETs can have different drain currents, drain voltage, and allowed time limits.

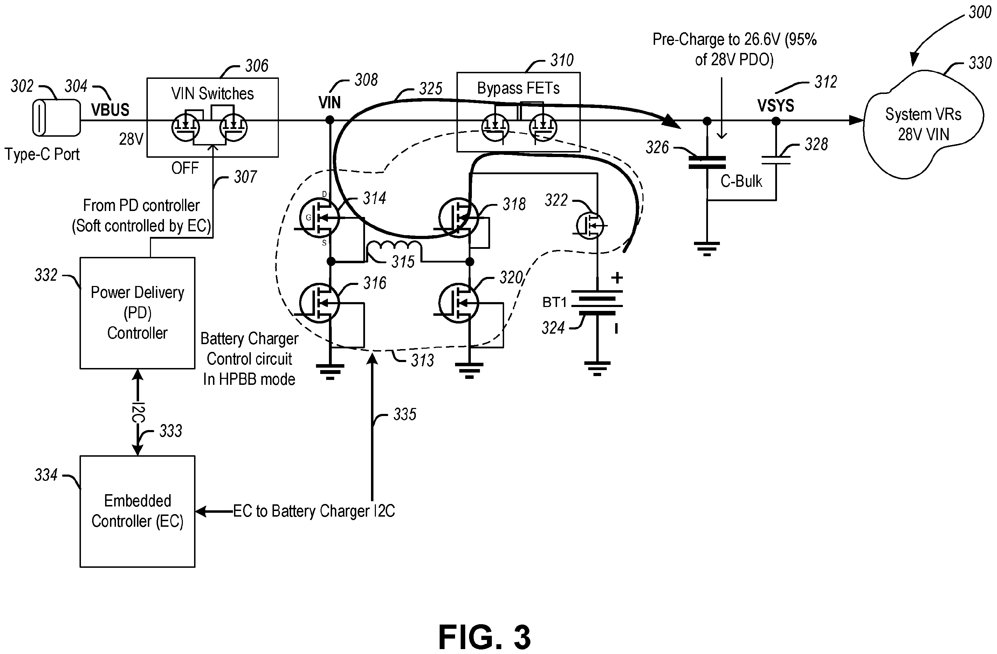

The disclosed techniques (e.g., as discussed in connection with FIGS. 3-11) can be used to address the above-described deficiencies of existing charging topologies. More specifically, when the system is already powered and running on battery (e.g., in S0 state), the bulk capacitor is pre-charged to a negotiated voltage by reverse boosting the battery voltage to the Vsys line through the battery charger, thus raising the capacitor voltage to nearly match the USB-C adapter voltage. Therefore, while turning on the VIN switches, the voltage difference across the bypass circuit transistors is eliminated, and the inrush current from the bulk capacitor (e.g., C-bulk) is avoided.

FIG. 3 illustrates a block diagram of an HPBB charger topology 300 using reverse boosting of a bulk capacitor, in accordance with some embodiments. Referring to FIG. 3, the HPBB charger topology 300 includes a USB-C port 302, a switching circuit 306 (e.g., VIN switches), a bypass circuit 310, a battery charging circuit 313, a battery 324, a bulk capacitor 326, an additional capacitor 328, a power delivery (PD) controller 332, and an embedded controller (EC) 334. In some aspects, the battery charging circuit 313 includes an inductor 315 and a plurality of FETs such as FETs 314, 316, 318, 320, and 322. The bulk capacitor 326 (C-Bulk) is a representation of large capacitance (e.g., a parallel connection of multiple capacitors) in the system components 330.

The voltage at the adapter side can be designated as Vbus 304. The input voltage at the battery charger side (e.g., before input to the bypass circuit 310) can be designated as Vin 308. The voltage at the system side (e.g., before the system components 330) and close to the bulk capacitor 326 can be designated as Vsys 312.

The PD controller 332 is coupled to the switching circuit 306 via communication link 307 and to the EC 334 via communication link 333. The EC 334 is coupled to the battery charging circuit 313 via communication link 335. In some aspects, communication links 333 and 335 are inter-integrated circuit (I2C) buses.

In some aspects, mobile workstations, which are battery-based systems, include an EC 334 as a platform power management agent, which can be used to coordinate the connected Type-C adapter using the USB-C port 302, the switching circuit 306, the battery charging circuit 313, and the battery 324. In some aspects, the EC 334 controls the Type-C adapter sink path and manages battery charge current and charger settings based on system states and requirements. When a system is running with only battery power (e.g., while in the S0 state), on the Type-C adapter connect, before enabling the switching circuit 306, the EC 334 can pre-charge the C-bulk capacitance (e.g., bulk capacitor 326) and raise the Vsys 312 level to the Type-C adapter voltage (Vbus 304) (or within a threshold of the Vsys 312 level) by reverse boosting Vsys 312 through the battery charging circuit 313 and the battery 324 via communication link 335 and current flow path 325. Therefore, while turning on the VIN switches of the switching circuit 306, the voltage differences across the FETs in the switching circuit 306 and the bypass circuit 310 are eliminated as the inrush current due to the bulk capacitor 326 (C-bulk) is diminished (or avoided).

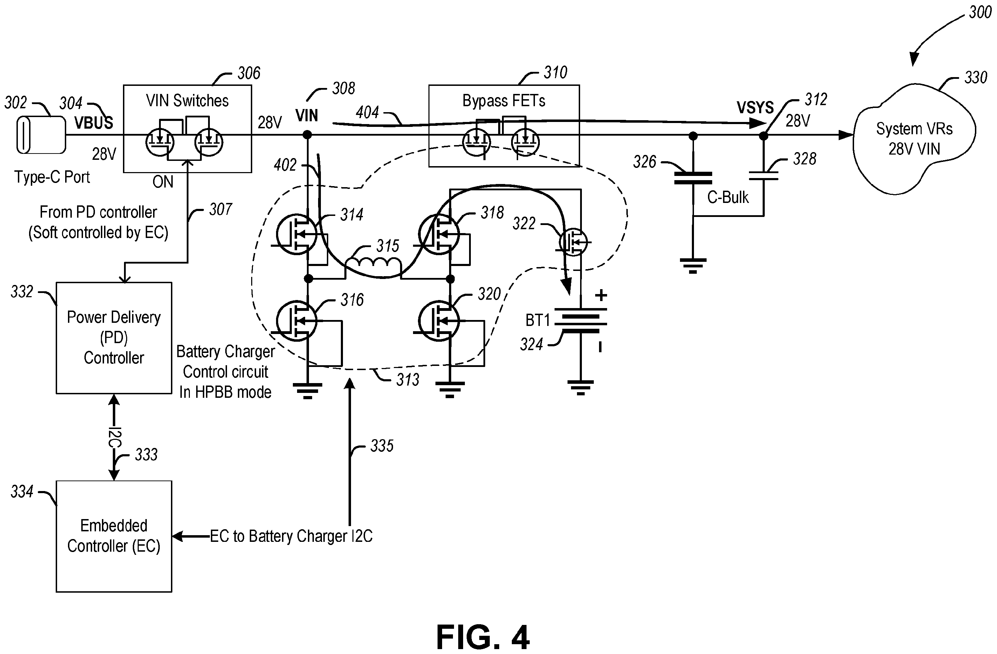

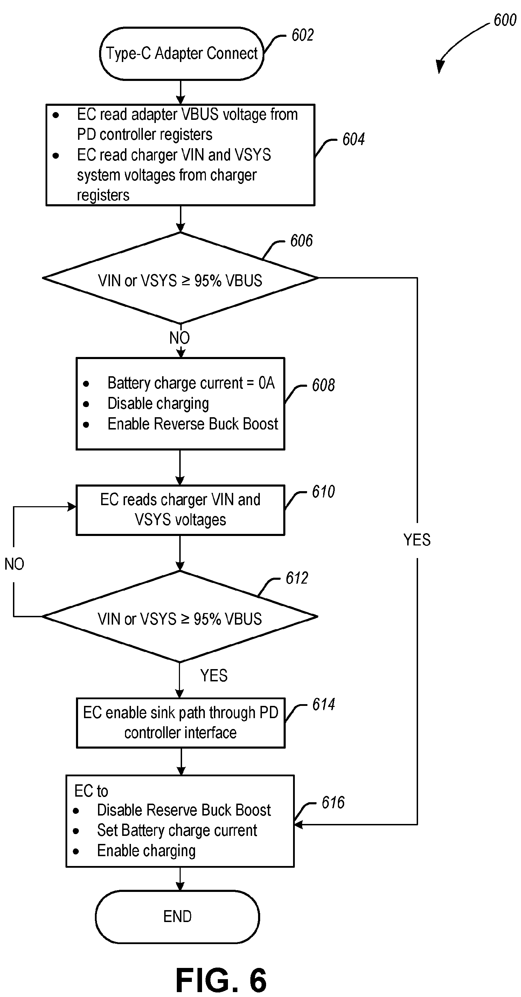

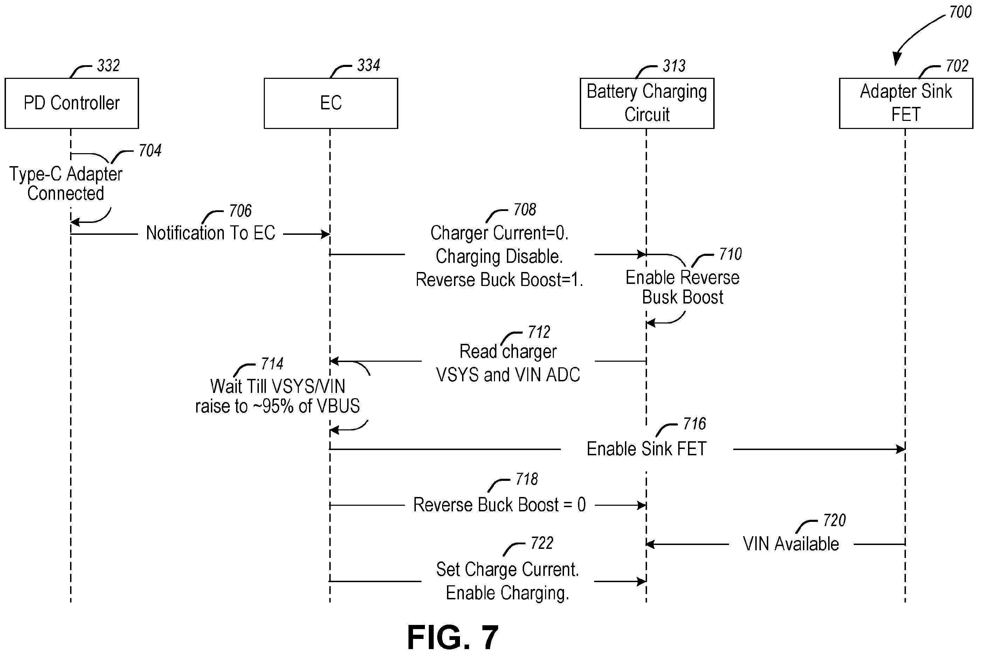

FIG. 4 illustrates a block diagram of the HPBB charger topology 300 of FIG. 3 with an open sink path and activated battery charging after the reverse boosting of the bulk capacitor, in accordance with some embodiments. More specifically, after the reverse boosting of the bulk capacitor 326 via current flow path 325, the EC 334 (via the PD controller 332) can activate (turn ON) the VIN switches of the switching circuit 306 (e.g., based on an instruction from the EC 334). The battery charging circuit then resumes charging the battery 324 via current flow path 402, and power is supplied to the system components 330 via the bypass circuit 310 using current flow path 404 (also referred to as a communication path). Example operation sequence and functions of the HPBB charger topology 300 are further discussed in connection with FIG. 6 and FIG. 7.

Capacitor inrush current I (where 1= Cdv/dt) is caused by two main factors - the rate of change of voltage (dv/dt) and the amount of capacitance (C), which is primarily a constant. In many of the existing inrush current control mechanisms, the amount of Inrush current (I) is reduced by slowing down the switch turn-on speed, which reduces the rate of change of voltage (dv/dt). However, another way to reduce the inrush current is to reduce the voltage difference between the input and the output of the switching device (MOSFET/Load switch such as switching circuit 306). When the voltage difference is reduced, the time period when the inrush current occurs is also reduced. One way to achieve this is to pre-charge the capacitors at the switch output (e.g., bulk capacitor 326) through some other controlled voltage source so that when the switching circuit is turned on, the amount of inrush current is reduced drastically since the capacitors are already prechared. This solution is discussed in connection with FIG. 3, FIG. 4, and FIGS. 6-10.

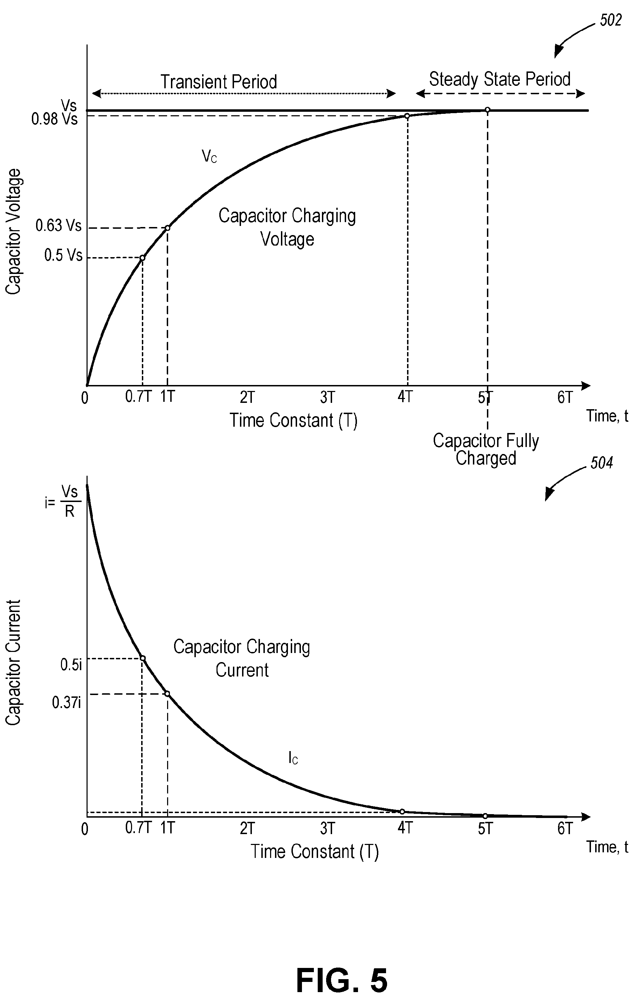

FIG. 5 illustrates graphs 502 and 504 of capacitor charge voltage and current. Referring to graphs 502 and 504, a higher amount of current is required when the capacitor voltage is less than 90% of its steady-state voltage. The charge current keeps reducing as the capacitor voltage keeps reaching the full charge voltage.

In some aspects, in the HPBB charger topology 300, when the sink FET is turned ON (e.g., in the switching circuit 306), an increased amount of capacitance on the Vsys 312 rail is directly connected to the USB-C adapter (Vbus 304), and when the system side rail starts ramping up, the adapter side voltage droops. This voltage droop on the Vbus 304 will be seen by the PD controller 332 as a voltage trip and causes a port reset, resulting in failure to charge the battery 324 or power up the system.

However, this issue may not be seen on an NVDC charger since the battery charger implements the buck conversion and supplies the system rails. System side capacitance in such charger topology is not directly connected to the adapter Vbus.

To solve this issue in the HPBB battery charger topology, the disclosed techniques can be used to pre-charge the system side capacitors (e.g., bulk capacitor 326) before enabling the Vbus sink FETs (e.g., the FETs of the switching circuit 306), through the battery charging circuit 313 operating in reverse boost mode on adapter connect events. In some aspects, the EC 334 is configured as a central system power management agent that can coordinate the connected Type-C adapter via the USB-C port 302, the VIN switch (e.g., the switching circuit 306), the battery 324, and the battery charging circuit 313. When the system is running with only battery power (e.g., while in the S0 state), on the Type-C adapter connect, before enabling the switching circuit 306, the EC 334 can pre-charge the C-bulk capacitance (bulk capacitor 326) and raise the Vsys 312 level to the Type-C adapter voltage (e.g., Vbus 304) by reverse boosting the battery voltage to Vsys line through the battery charging circuit 313 and the battery 324. Therefore, while turning on the VIN switches of the switching circuit 306, the voltage difference across the MOSFETs (e.g., the transistors in the switching circuit 306 and the bypass circuit 310) is reduced, and the inrush current due to the bulk capacitor 326 is avoided.

FIG. 6 is a flow diagram of an example method 600 of operation of the HPBB charger topology of FIG. 3, in accordance with some embodiments. Referring to FIG. 3 and FIG. 6, when the HPBB charger topology 300 system is running only using the battery 324, the VIN switches of the switching circuit 306 will be disabled by default. In some aspects, the following operations illustrated in FIG. 6 can be performed based on the detection of a Type-C adapter connect event.

At operation 602, the EC 334 detects a Type-C adapter connect notification from the PD controller 332 (e.g., when a Type-C adapter is connected to the USB-C port 302).

At operation 604, EC 334 reads the connected adapter negotiated voltage (e.g., Vbus 304) from the PD controller 332 registers. EC 334 also reads the system input voltage (e.g., Vsys 312) and charger input voltage (e.g., Vin 308) from the battery charging circuit 313.

At operation 606, a determination is made on whether Vsys 312 or Vin 308 are greater than or equal to 95% of Vbus (or another pre-configured threshold that could be different than 95%), then EC to raise Vsys and Vin to 95% of Vbus 304 before enabling the VIN switches of the switching circuit 306.

In aspects when Vsys 312 or Vin 308 is greater than or equal to 95% of Vbus 304, processing resumes at operation 616.

In aspects when Vsys 312 or Vin 308 is not greater than or equal to 95% of Vbus 304, processing resumes at operation 608. At operation 608, EC 334 adjusts the battery charge current (CC) of the battery charging circuit 313 0A to change the battery charge current from its default value and turns off charging (CC=0A). This will avoid a self-charging loop when the buck boost is subsequently enabled.

At operation 608, EC 334 also enables a reverse buck-boost so that the battery 324 charges the C-bulk capacitor (e.g., bulk capacitor 326) via the battery charging circuit 313 and current flow path 325 to raise the level of Vsys 312 and Vin 308 voltage.

At operation 612, a determination is made on whether Vsys 312 or Vin 308 is greater than or equal to 95% of Vbus 304. In aspects when Vsys 312 or Vin 308 is not greater than or equal to 95% of Vbus 304, the reverse buck boost charging continues, and processing resumes at operation 610. In this regard, EC 334 keeps monitoring Vsys and Vin voltages (e.g., through the battery charging circuit ADC readings) until Vsys or Vin raises to approximately about 95% Vbus 304 voltage.

In aspects when Vsys 312 or Vin 308 is greater than or equal to approximately about 95% of Vbus 304, processing continues at operation 614. At operation 614, once Vsys 312 or Vin 308 are approximately about 95% of Vbus 304, EC 334 enables the VIN switches via the PD controller 332 and connects the Type-C adapter coupled to the USB-C port 302 to system load (e.g., system components 330).

At operation 616, EC 334 turns off the reverse buck boost, sets the battery charge current, and enables the charging of battery 324 by the battery charging circuit 313. In this regard, the sink path is enabled via current flow path 404, and the charging path is enabled via current flow path 402.

As the VIN switches of the switching circuit 306 are enabled with Vbus 304 being approximately equal to Vsys 312, the high inrush current is avoided, and the CSnkBulkPd (100uF) requirement of the PD specification is also achieved. After the Type-C adapter (associated with Vbus 304) is connected to the system load (associated with Vsys 312), EC334 programs the battery charge current and charge voltage based on battery rating and enables battery charging.

FIG. 7 is a swimlane diagram of an example method 700 of operation of the HPBB charger topology of FIG. 3, in accordance with some embodiments. Referring to FIG. 7, at operation 704, PD controller 332 detects that a Type-C adapter is connected to the USB-C port 302. At operation 706, the PD controller 332 communicates a notification to EC 334 of the detected adapter. At operation 708, the battery charging current generated by the battery charging circuit 313 is set at 0A (e.g., charging is disabled), and reverse buck boost is enabled. At operation 710, the battery charging circuit 313 initiates charging of the bulk capacitor 326 via current flow path 325. At operation 712, EC 334 reads the battery charging circuit ADCs to obtain the Vsys 312 and Vin 308 voltages.

At operation 714, EC 334 maintains charging uninterrupted until Vsys or Vin reaches a voltage of approximately about 95% of the Vbus 304 voltage. After such voltage is reached, at operation 716, EC 334 enables the adapter sink FET 702 (e.g., turns ON the switching circuit 306). At operation 718, EC 334 deactivates the reverse buck boost (e.g., deactivates pre-charging of the bulk capacitor). At operation 720, Vin 308 voltage is detected at the battery charging circuit 313. At operation 722, EC 334 sets the charge current and enables the charging of battery 324 via the battery charging circuit 313.

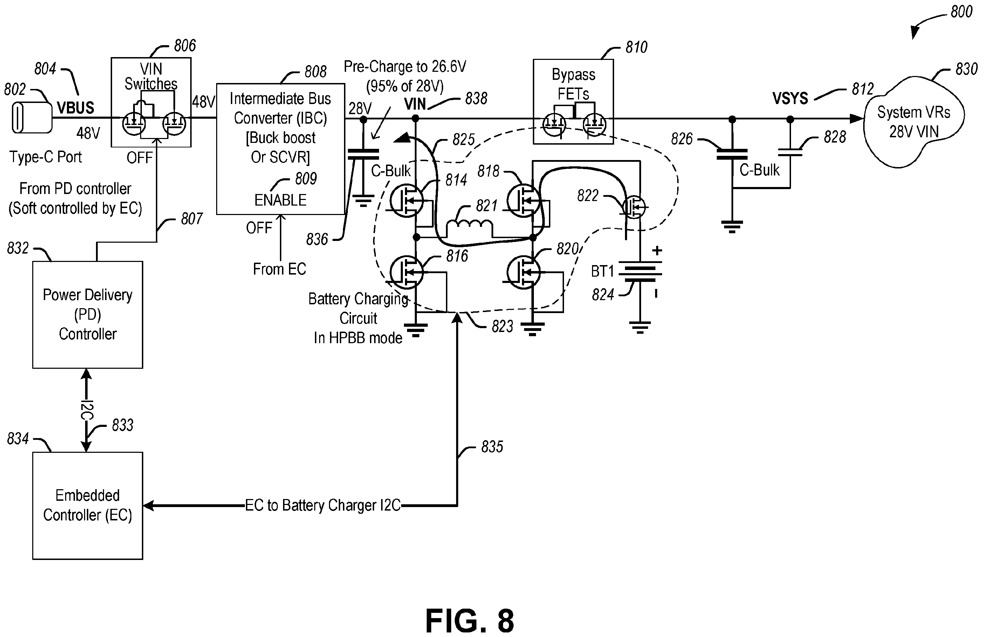

FIG. 8 illustrates a block diagram of an HPBB charger topology 800 using a voltage converter and reverse boosting of a bulk capacitor, in accordance with some embodiments. Referring to FIG. 8, the HPBB charger topology 800 includes a USB-C port 802, a switching circuit 806 (e.g., VIN switches), an intermediate bus converter (IBC) 808, a bypass circuit 810, a battery charging circuit 823, a battery 824, a first bulk capacitor 836, a second bulk capacitor 826, an additional capacitor 828, a PD controller 832, and an EC 834. In some aspects, the battery charging circuit 823 includes an inductor 821 and a plurality of FETs such as FETs 814, 816, 818, 820, and 822.

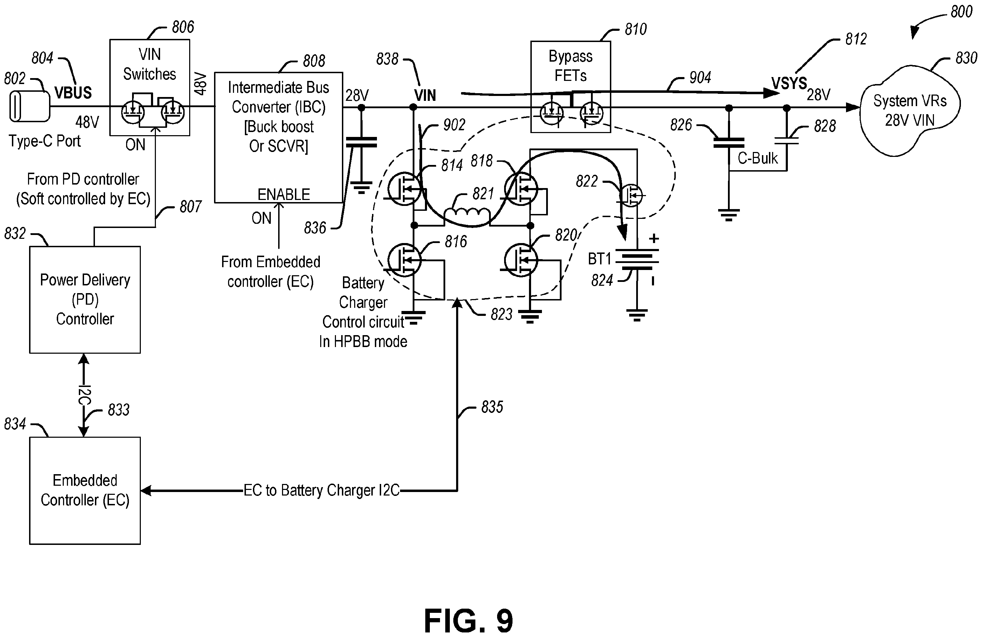

In some aspects, the HPBB charger topology 800 can be used in connection with input voltages greater than 28V (e.g., 48V). In this regard, the IBC 808 can be a voltage converter configured to convert the 48V input voltage to a 28V output voltage, as illustrated in FIG. 8 and FIG. 9.

The voltage at the adapter side can be designated as Vbus 804 (e.g., 48V). The input voltage at the battery charger side (e.g., before input to the bypass circuit 310) can be designated as Vin 308 (e.g., 28V after conversion by the IBC 808). The voltage at the system side (e.g., before the system components 830) and close to the second bulk capacitor 826 can be designated as Vsys 812.

The PD controller 832 is coupled to the switching circuit 806 via communication link 807 and to the EC 834 via communication link 833. The EC 834 is coupled to the battery charging circuit 823 via communication link 835. In some aspects, communication links 833 and 835 are inter-integrated circuit (I2C) buses.

When a system is running with only battery power (e.g., while in the S0 state), on the Type-C adapter connect, before enabling the switching circuit 806, the EC 834 can turn OFF the IBC 808 and pre-charge the C-bulk capacitance (e.g., first bulk capacitor 836) and raise the Vsys 812 and/or Vin 838 level to at least 95% of Vbus 804 by reverse boosting Vin 838 through the battery charging circuit 823 and the battery 824 via communication path 825. Therefore, while turning ON the VIN switches of the switching circuit 806, the high inrush current from IBC 808 is avoided so that IBC 808 does not trip when turning ON.

In some aspects, communication link 807 is used to enable the switching circuit 806 first, and then the IBC ENABLE signal at the enable pin 809 can be driven by EC 834 once Vin 838 reaches 95% of Vbus 804.

FIG. 9 illustrates a block diagram of the HPBB charger topology 800 of FIG. 8 with an open sink path and activated battery charging after the reverse boosting of the bulk capacitor, in accordance with some embodiments. After the reverse boosting of the first bulk capacitor 836 via communication path 825, EC 834 (via the PD controller 832) can activate (turn ON) the VIN switches of the switching circuit 806 (e.g., based on an instruction from EC 834). The battery charging circuit 823 then resumes charging the battery 824 via communication path 902, and power is supplied to the system components 830 via the bypass circuit 810 using communication path 904. Example operation sequence and functions of the HPBB charger topology 800 are further discussed below.

In some aspects, the HPBB charger topology 800 is used in connection with USB-C charging applications with power that is greater than 28V. EC 834 obtains a Type-C adapter connect notification from the PD controller 832, and EC 834 reads the connected adapter negotiated voltage (e.g., Vbus 804 voltage). EC 834 reads the system input voltage (Vsys 812) and the battery charger circuit input voltage (e.g., Vin 838 from the battery charger circuit ADC).

If Vsys and/or Vin are less than 95% of Vbus 804 (or the voltage at the output of IBC 808), then EC 834 raises Vin to 95% of IBC 808 output voltage before enabling the VIN switches of the switching circuit 806 and IBC 808.

EC 834 changes the battery charge current (CC) to CC=0A from its default value and disables charging. This will avoid initiating a self-charging loop when the buck boost is enabled subsequently.

EC 834 enables the reverse-Buck-Boost in the charger chip to charge the first bulk capacitor 836 at the IBC 808 output and raise the Vin 838 voltage.

In aspects when IBC 808 is down-converting to 28V, Vin 838 can be raised to approximately about 26.6V (95%). In aspects when IBC 808 is down-converting to 20V, then EC 834 can raise Vin 838 to approximately about 19V (95%).

In some aspects, EC 834 can monitor Vin 838 (e.g., via the battery charging circuit 823 ADC readings) until Vin 838 increases to approximately about 95% of the IBC output designed voltage.

In some aspects, once Vin 838 is approximately about 95% of IBC's designed output, EC 834 can enable the VIN switches of the switching circuit 806 and enable IBC 808, thus connecting the Type-C adapter to the system components 830. The above functionalities can be used to improve the IBC output voltage droop while ramping up.

In some aspects, once the Vin 838 voltage is stabilized and safely transitioned to the adapter, the battery charging circuit can turn ON the bypass FETs of the bypass circuit 810 with slow turn-on to control the inrush current from C-bulk (e.g., second bulk capacitor 826) at the system components 830.

In some aspects, after the Type-C adapter is connected to the system load (Vsys), EC 834 can program the battery charge current and charge voltage based on the battery rating and enable charging.

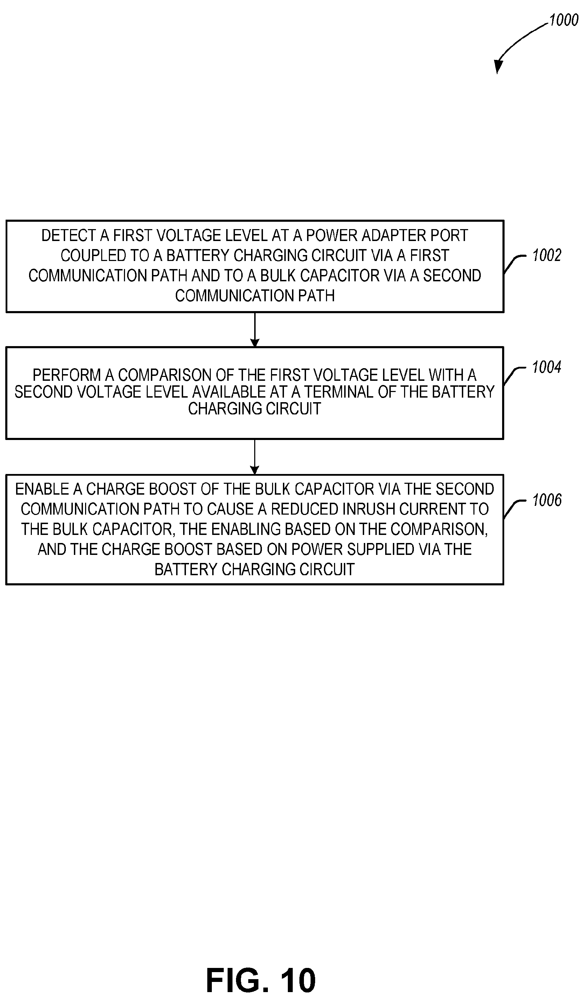

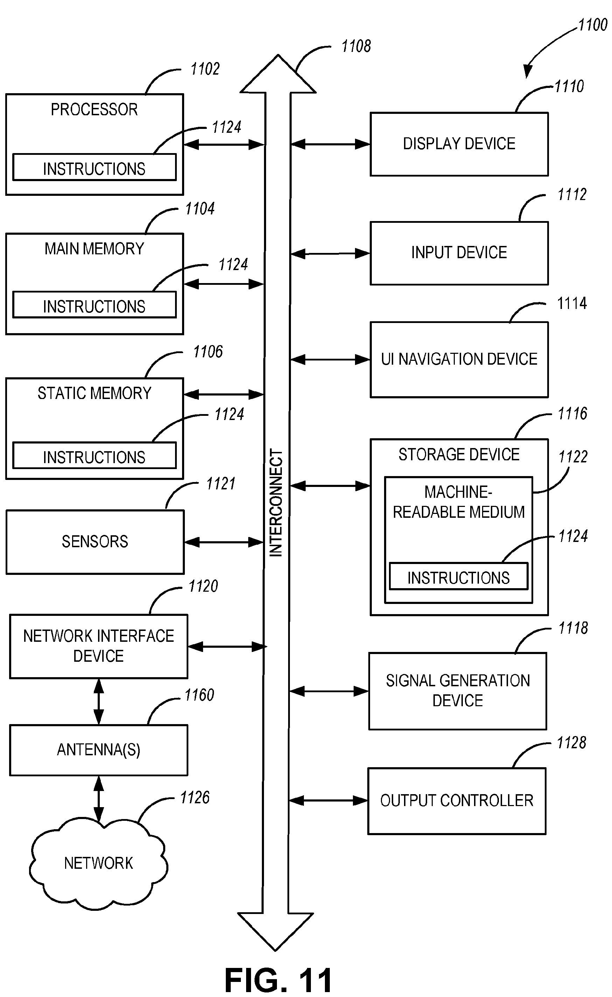

FIG. 10 is a flow diagram of an example method for inrush current regulation in a battery charger topology, in accordance with some embodiments. Referring to FIG. 10, method 1000 includes operations 1002, 1004, and 1006, which may be executed by an embedded controller or another processor of a computing device (e.g., hardware processor 1102 of machine 1100 illustrated in FIG. 11 which can include one or more of the circuits discussed in connection with FIGS. 3-9). In some embodiments, one or more of the circuits discussed in connection with FIGS. 3-9 can perform the functionalities listed in FIG. 8 as well as in the examples listed below.

At operation 1002, a first voltage level (e.g., Vbus 304) is detected at a power adapter port (e.g., USB-C port 302). The power adapter port is coupled to a battery charging circuit (e.g., battery charging circuit 313) via a first communication path (e.g., current flow path 402). The power adapter port is coupled to a bulk capacitor (e.g., bulk capacitor 326) via a second communication path (e.g., current flow path 404).

At operation 1004, a comparison of the first voltage level with a second voltage level (e.g., Vin 308) available at a terminal of the battery charging circuit is performed.

At operation 1006, a charge boost of the bulk capacitor is enabled via the second communication path to cause a reduced inrush current to the bulk capacitor. The enabling is based on the comparison. The charge boost is based on power supplied via the battery charging circuit.

FIG. 11 illustrates a block diagram of an example machine 1100 upon which any one or more of the techniques (e.g., methodologies) discussed herein may perform. In alternative embodiments, the machine 1100 may operate as a standalone device or may be connected (e.g., networked) to other machines. In a networked deployment, machine 1100 may operate in the capacity of a server machine, a client machine, or both in server-client network environments. In an example, machine 1100 may function as a peer machine in a peer-to-peer (P2P) (or other distributed) network environment. The machine 1100 may be a personal computer (PC), a tablet PC, a set-top box (STB), a personal digital assistant (PDA), a portable communications device, a mobile telephone, a smartphone, a web appliance, a network router, switch or bridge, or any other computing device capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations. The terms "machine," "computing device," and "computer system" are used interchangeably.

Machine (e.g., computer system) 1100 may include a hardware processor 1102 (e.g., a central processing unit (CPU), a graphics processing unit (GPU), a hardware processor core, or any combination thereof), a main memory 1104, and a static memory 1106, some or all of which may communicate with each other via an interlink (e.g., bus) 1108. In some aspects, the main memory 1104, the static memory 1106, or any other type of memory (including cache memory) used by machine 1100 can be configured based on the disclosed techniques or can implement the disclosed memory devices.

Specific examples of main memory 1104 include Random Access Memory (RAM) and semiconductor memory devices, which may include, in some embodiments, storage locations in semiconductors such as registers. Specific examples of static memory 1106 include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; RAM; and CD-ROM and DVD-ROM disks.

Machine 1100 may further include a display device 1110, an input device 1112 (e.g., a keyboard), and a user interface (UI) navigation device 1114 (e.g., a mouse). In an example, the display device 1110, input device 1112, and UI navigation device 1114 may be a touch screen display. The machine 1100 may additionally include a storage device (e.g., drive unit or another mass storage device) 1116, a signal generation device 1118 (e.g., a speaker), a network interface device 1120, and one or more sensors 1121, such as a global positioning system (GPS) sensor, compass, accelerometer, or other sensors. The machine 1100 may include an output controller 1128, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.). In some embodiments, the hardware processor 1102 and/or instructions 1124 may comprise processing circuitry and/or transceiver circuitry.

The storage device 1116 may include a machine-readable medium 1122 on which one or more sets of data structures or instructions 1124 (e.g., software) embodying or utilized by any one or more of the techniques or functions described herein can be stored. Instructions 1124 may also reside, completely or at least partially, within the main memory 1104, within static memory 1106, or the hardware processor 1102 during execution thereof by the machine 1100. In an example, one or any combination of the hardware processor 1102, the main memory 1104, the static memory 1106, or the storage device 1116 may constitute machine-readable media.

Specific examples of machine-readable media may include non-volatile memory, such as semiconductor memory devices (e.g., EPROM or EEPROM) and flash memory devices; magnetic disks, such as internal hard disks and removable disks; magneto-optical disks; RAM; and CD-ROM and DVD-ROM disks.

While the machine-readable medium 1122 is illustrated as a single medium, the term "machine-readable medium" may include a single medium or multiple media (e.g., a centralized or distributed database and/or associated caches and servers) configured to store instructions 1124.

An apparatus of the machine 1100 may be one or more of a hardware processor 1102 (e.g., a central processing unit (CPU), a graphics processing unit (GPU), a hardware processor core, or any combination thereof), a main memory 1104 and a static memory 1106, one or more sensors 1121, a network interface device 1120, one or more antennas 1160, a display device 1110, an input device 1112, a UI navigation device 1114, a storage device 1116, instructions 1124, a signal generation device 1118, and an output controller 1128. The apparatus may be configured to perform one or more of the methods and/or operations disclosed herein. The apparatus may be intended as a component of machine 1100 to perform one or more of the methods and/or operations disclosed herein and/or to perform a portion of one or more of the methods and/or operations disclosed herein. In some embodiments, the apparatus may include a pin or other means to receive power. In some embodiments, the apparatus may include power conditioning hardware.

The term "machine-readable medium" may include any medium that is capable of storing, encoding, or carrying instructions for execution by machine 1100 and that causes machine 1100 to perform any one or more of the techniques of the present disclosure or that is capable of storing, encoding, or carrying data structures used by or associated with such instructions. Non-limiting machine-readable medium examples may include solid-state memories and optical and magnetic media. Specific examples of machine-readable media may include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine-readable media may include non-transitory machine-readable media. In some examples, machine-readable media may include machine-readable media that is not a transitory propagating signal.

The instructions 1124 may further be transmitted or received over a communications network 1126 using a transmission medium via the network interface device 1120 utilizing any one of several transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, a Long Term Evolution (LTE) family of standards, a Universal Mobile Telecommunications System (UMTS) family of standards, peer-to-peer (P2P) networks, among others.

In an example, the network interface device 1120 may include one or more physical jacks (e.g., Ethernet, coaxial, or phone jacks) or one or more antennas to connect to the communications network 1126. In an example, the network interface device 1120 may include one or more antennas 1160 to wirelessly communicate using at least one single-input multiple-output (SIMO), multiple-input multiple-output (MIMO), or multiple-input single-output (MISO) techniques. In some examples, the network interface device 1120 may wirelessly communicate using multiple-user MIMO techniques. The term "transmission medium" shall be taken to include any intangible medium that can store, encode, or carry instructions for execution by the machine 1100 and includes digital or analog communications signals or other intangible media to facilitate communication of such software.

Examples, as described herein, may include, or may operate on, logic or several components, modules, or mechanisms. Modules are tangible entities (e.g., hardware) capable of performing specified operations and may be configured or arranged in a particular manner. In an example, circuits may be arranged (e.g., internally or concerning external entities such as other circuits) in a specified manner as a module. In an example, the whole or part of one or more computer systems (e.g., a standalone, client, or server computer system) or one or more hardware processors may be configured by firmware or software (e.g., instructions, an application portion, or an application) as a module that operates to perform specified operations. In an example, the software may reside on a machine-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part, all, or any operation described herein. Considering examples in which modules are temporarily configured, each of the modules need not be instantiated at any one moment in time. For example, where the modules comprise a general-purpose hardware processor configured using the software, the general-purpose hardware processor may be configured as respective different modules at separate times. The software may accordingly configure a hardware processor, for example, to constitute a particular module at one instance of time and to constitute a different module at a different instance of time.

Some embodiments may be implemented fully or partially in software and/or firmware. This software and/or firmware may take the form of instructions contained in or on a non-transitory computer-readable storage medium. Those instructions may then be read and executed by one or more processors to enable the performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read-only memory (ROM), random access memory (RAM), magnetic disk storage media, optical storage media, flash memory, etc.

The above-detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplated are examples using any combination or permutation of those elements shown or described (or one or more aspects thereof), either with respect to a particular example (or one or more aspects thereof) or with respect to other examples (or one or more aspects thereof) shown or described herein.

Publications, patents, and patent documents referred to in this document are incorporated by reference herein in their entirety, as though individually incorporated by reference. In the event of inconsistent usage between this document and those documents so incorporated by reference, the usage in the incorporated reference(s) is supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc., are used merely as labels and are not intended to suggest a numerical order for their objects.

The embodiments as described above may be implemented in various hardware configurations that may include a processor for executing instructions that perform the techniques described. Such instructions may be contained in a machine-readable medium such as a suitable storage medium or a memory or other processor-executable medium.

The embodiments as described herein may be implemented in several environments, such as part of a system on chip, a set of intercommunicating functional blocks, or similar, although the scope of the disclosure is not limited in this respect.

Described implementations of the subject matter can include one or more features, alone or in combination, as illustrated below by way of examples.

Example 1 is an apparatus comprising a switching circuit comprising an input terminal and an output terminal, the input terminal of the switching circuit coupled to a power adapter; a battery charging circuit comprising a first terminal and a second terminal, the first terminal of the battery charging circuit coupled to the output terminal of the switching circuit, and the second terminal of the battery charging circuit coupled to a battery; a bypass circuit comprising an input terminal and an output terminal, the input terminal of the bypass circuit coupled to the output terminal of the switching circuit and the first terminal of the battery charging circuit; and a bulk capacitor coupled to the output terminal of the bypass circuit.

In Example 2, the subject matter of Example 1 includes a power delivery (PD) controller coupled to the switching circuit.

In Example 3, the subject matter of Example 2 includes an embedded controller coupled to the PD controller and the battery charging circuit.

In Example 4, the subject matter of Examples 1-3 includes subject matter where the switching circuit comprises a first field-effect transistor (FET) coupled to a second FET, wherein a drain of the first FET is coupled to a Type-C port of the power adapter.

In Example 5, the subject matter of Example 4 includes a gate of the first FET coupled to a gate of the second FET.

In Example 6, the subject matter of Examples 4-5 includes a source of the first FET coupled to a source of the second FET.

In Example 7, the subject matter of Examples 4-6 includes a drain of the second FET coupled to the first terminal of the battery charging circuit and the input terminal of the bypass circuit.

In Example 8, the subject matter of Examples 1-7 includes a battery charging circuit comprising a plurality of field-effect transistors (FETs) forming a power regulator.

In Example 9, the subject matter of Example 8 includes subject matter where the plurality of FETs comprises at least a first FET, a second FET, a third FET, a fourth FET, and a fifth FET, and wherein a drain of the first FET is coupled to the output terminal of the switching circuit and the input terminal of the bypass circuit.

In Example 10, the subject matter of Example 9 includes a source of the first FET coupled to a drain of the second FET.

In Example 11, the subject matter of Example 10 includes subject matter where the battery charging circuit further comprises an inductor, the inductor comprising a first terminal coupled to the source of the first FET and the drain of the second FET, and a second terminal coupled to a source of the third FET and a drain of the fourth FET.

In Example 12, the subject matter of Example 11 includes a drain of the third FET coupled to a drain of the fifth FET.

In Example 13, the subject matter of Example 12 includes a source of the fifth FET coupled to the battery.

In Example 14, the subject matter of Examples 1-13 includes subject matter where the bypass circuit comprises a first field-effect transistor (FET) and a second FET, wherein a drain of the first FET is coupled to the output terminal of the switching circuit and the first terminal of the battery charging circuit.

In Example 15, the subject matter of Example 14 includes a drain of the second FET coupled to the bulk capacitor.

In Example 16, the subject matter of Examples 1-15 includes one or more interconnects coupled to the switching circuit, the battery charging circuit, and the bypass circuit.

In Example 17, the subject matter of Examples 3-16 includes subject matter where the apparatus comprises a processor and wherein the processor includes one or more of the switching circuit, the battery charging circuit, the bypass circuit, the bulk capacitor, the PD controller, and the embedded controller.

In Example 18, the subject matter of Example 17 includes one or more interconnects coupling two or more of the switching circuit, the battery charging circuit, the bypass circuit, the bulk capacitor, the PD controller, and the embedded controller.

Example 19 is an apparatus comprising: a switching circuit comprising an input terminal and an output terminal, the input terminal of the switching circuit coupled to a power adapter; a voltage converter circuit comprising an input terminal and an output terminal, the input terminal of the voltage converter circuit coupled to the output terminal of the switching circuit; a battery charging circuit comprising a first terminal and a second terminal, the first terminal of the battery charging circuit coupled to the output terminal of the voltage converter circuit, and the second terminal of the battery charging circuit coupled to a battery; a bypass circuit comprising an input terminal and an output terminal, the input terminal of the bypass circuit coupled to the output terminal of the voltage converter circuit and the first terminal of the battery charging circuit; a first bulk capacitor coupled to the output terminal of the voltage converter circuit and the battery charging circuit; and a second bulk capacitor coupled to the output terminal of the bypass circuit.

In Example 20, the subject matter of Example 19 includes a power delivery (PD) controller coupled to the switching circuit.

In Example 21, the subject matter of Example 20 includes an embedded controller coupled to the PD controller and the battery charging circuit.

In Example 22, the subject matter of Examples 19-21 includes subject matter where the switching circuit comprises a first field-effect transistor (FET) coupled to a second FET, wherein a drain of the first FET is coupled to a Type-C port of the power adapter.

In Example 23, the subject matter of Example 22 includes a gate of the first FET coupled to a gate of the second FET.

In Example 24, the subject matter of Examples 22-23 includes a source of the first FET coupled to a source of the second FET.

In Example 25, the subject matter of Examples 22-24 includes a drain of the second FET coupled to the input terminal of the voltage converter circuit.

In Example 26, the subject matter of Examples 19-25 includes subject matter where the battery charging circuit comprises a plurality of field-effect transistors (FETs) forming a power regulator.

In Example 27, the subject matter of Example 26 includes subject matter where the plurality of FETs comprises at least a first FET, a second FET, a third FET, a fourth FET, and a fifth FET, and wherein a drain of the first FET is coupled to the output terminal of the voltage converter circuit and the input terminal of the bypass circuit.

In Example 28, the subject matter of Example 27 includes a source of the first FET coupled to a drain of the second FET.

In Example 29, the subject matter of Example 28 includes subject matter where the battery charging circuit further comprises an inductor, the inductor comprising a first terminal coupled to the source of the first FET and the drain of the second FET, and a second terminal coupled to a source of the third FET and a drain of the fourth FET.

In Example 30, the subject matter of Example 29 includes a drain of the third FET coupled to a drain of the fifth FET.

In Example 31, the subject matter of Example 30 includes subject matter where a source of the fifth FET is coupled to the battery.

In Example 32, the subject matter of Examples 19-31 includes subject matter where the bypass circuit comprises a first field-effect transistor (FET) and a second FET, wherein a drain of the first FET is coupled to the output terminal of the voltage converter circuit, the first terminal of the battery charging circuit, and the first bulk capacitor.

In Example 33, the subject matter of Example 32 includes a drain of the second FET coupled to the second bulk capacitor.

In Example 34, the subject matter of Examples 19-33 includes one or more interconnects coupled to the switching circuit, the voltage converter circuit, the battery charging circuit, and the bypass circuit.

In Example 35, the subject matter of Examples 21-34 includes subject matter where the apparatus comprises a processor, and wherein the processor includes one or more of the switching circuit, the voltage converter circuit, the battery charging circuit, the bypass circuit, the bulk capacitor, the PD controller, and the embedded controller.

In Example 36, the subject matter of Example 35 includes one or more interconnects coupling two or more of the switching circuit, the battery charging circuit, the bypass circuit, the bulk capacitor, the PD controller, and the embedded controller.

Example 37 is a system comprising memory and at least one processor coupled to the memory, the at least one processor to detect a first voltage level at a power adapter port, the power adapter port coupled to a battery charging circuit via a first communication path, and the power adapter port coupled to a bulk capacitor via a second communication path; perform a comparison of the first voltage level with a second voltage level available at a terminal of the battery charging circuit; and enable a charge boost of the bulk capacitor via the second communication path based on the comparison, the charge boost based on power supplied via the battery charging circuit, and the charge boost causing a reduction of inrush current of the bulk capacitor in comparison to the inrush current prior to the charge boost.

In Example 38, the subject matter of Example 37 includes subject matter where to enable the charge boost the at least one processor is to disable charging of the battery by the battery charging circuit via a switching circuit coupled to the power adapter port and the battery charging circuit.

In Example 39, the subject matter of Example 38 includes subject matter where the at least one processor is to enable a battery coupled to the battery charging circuit to supply the power during the charge boost.

In Example 40, the subject matter of Examples 37-39 includes subject matter where the at least one processor is to enable the charge boost when a difference between the first voltage and the second voltage is above a threshold voltage level.

In Example 41, the subject matter of Example 40 includes subject matter where the at least one processor is to disable the charge boost when the difference between the first voltage and the second voltage is at or below the threshold voltage level.

In Example 42, the subject matter of Example 41 includes subject matter where the at least one processor is to enable the battery charging circuit to charge the battery via the first communication path; and enable the power adapter port to power one or more additional circuits via the second communication path, the one or more additional circuits coupled to the bulk capacitor.

In Example 43, the subject matter of Examples 37-42 includes a switching circuit coupled to the power adapter port and the battery charging circuit; and a power delivery (PD) controller coupled to the switching circuit.

In Example 44, the subject matter of Example 43 includes subject matter where the at least one processor is to detect the first voltage level at the power adapter port via the PD controller.

In Example 45, the subject matter of Examples 37-44 includes subject matter where the at least one processor is to detect a third voltage level at the bulk capacitor and perform a second comparison of the first voltage level with the third voltage level.

In Example 46, the subject matter of Example 45 includes subject matter where the at least one processor is to enable the charge boost of the bulk capacitor via the second communication path further based on the second comparison.

Example 47 is a method comprising detecting a first voltage level at a power adapter port, the power adapter port coupled to a battery charging circuit via a first communication path, and the power adapter port coupled to a bulk capacitor via a second communication path; performing a comparison of the first voltage level with a second voltage level available at a terminal of the battery charging circuit; and enabling a charge boost of the bulk capacitor via the second communication path to cause a reduced inrush current to the bulk capacitor, the enabling based on the comparison, and the charge boost based on power supplied via the battery charging circuit.

In Example 48, the subject matter of Example 47 includes subject matter where the enabling further comprises disabling charging of the battery by the battery charging circuit via a switching circuit coupled to the power adapter port and the battery charging circuit.

In Example 49, the subject matter of Example 48 includes enabling a battery coupled to the battery charging circuit to supply the power during the charge boost, wherein the supply of the power is associated with the reduced inrush current that is smaller than an inrush current prior to enabling the charge boost.

In Example 50, the subject matter of Examples 47-49 includes enabling the charge boost when a difference between the first voltage and the second voltage is above a threshold voltage level.

In Example 51, the subject matter of Example 50 includes disabling the charge boost when the difference between the first voltage and the second voltage is at or below the threshold voltage level.

In Example 52, the subject matter of Example 51 includes enabling the battery charging circuit to charge the battery via the first communication path; and enabling the power adapter port to power one or more additional circuits via the second communication path, the one or more additional circuits coupled to the bulk capacitor.

In Example 53, the subject matter of Examples 47-52 includes detecting the first voltage level at the power adapter port via a power delivery (PD) controller coupled to a switching circuit of the power adapter port.

In Example 54, the subject matter of Examples 47-53 includes detecting a third voltage level at the bulk capacitor; and performing a second comparison of the first voltage level with the third voltage level.

In Example 55, the subject matter of Example 54 includes enabling the charge boost of the bulk capacitor via the second communication path further based on the second comparison.

Example 56 is an apparatus comprising means to perform a method as Exampleed in any preceding claim.

Example 57 is machine-readable storage, including machine-readable instructions, which, when executed, cause a computing device to implement a method as Exampleed in any preceding claim.

Example 58 is machine-readable storage, including machine-readable instructions, which, when executed, cause a power supply circuit to implement a method as shown in any preceding claim.

Example 59 is a computer program comprising instructions which, when the program is executed by a computer, cause the computer to carry out the method as shown in any preceding claim.

Example 60 is at least one machine-readable medium including instructions that, when executed by processing circuitry, cause the processing circuitry to perform operations to implement any of Examples 1-59.

Example 61 is an apparatus comprising means to implement any of Examples 1-59.

Example 62 is a system to implement any of Examples 1-59.

Example 63 is a method to implement any of Examples 1-59.

The above description is intended to be illustrative and not restrictive. For example, the above-described examples (or one or more aspects thereof) may be used in combination with others. Other embodiments may be used, such as by one of ordinary skill in the art upon reviewing the above description. The abstract is to allow the reader to ascertain the nature of the technical disclosure quickly. It is submitted with the understanding that it will not be used to interpret or limit the scope or meaning of the claims. Also, in the above Detailed Description, various features may be grouped to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment. The scope of the embodiments disclosed herein is to be determined regarding the appended claims, along with the full scope of equivalents to which such claims are entitled.

## Claims

1. An apparatus comprising:
a switching circuit comprising an input terminal and an output terminal, the input terminal of the switching circuit coupled to a power adapter;
a battery charging circuit comprising a first terminal and a second terminal, the first terminal of the battery charging circuit coupled to the output terminal of the switching circuit, and the second terminal of the battery charging circuit coupled to a battery;
a bypass circuit comprising an input terminal and an output terminal, the input terminal of the bypass circuit coupled to the output terminal of the switching circuit and the first terminal of the battery charging circuit; and
a bulk capacitor coupled to the output terminal of the bypass circuit.

2. The apparatus of claim 1, further comprising:
a power delivery (PD) controller coupled to the switching circuit.

3. The apparatus of claim 2, further comprising:
an embedded controller coupled to the PD controller and the battery charging circuit.

4. The apparatus of any of claims 1-3, wherein the switching circuit comprises:
a first field-effect transistor (FET) coupled to a second FET, wherein a drain of the first FET is coupled to a Type-C port of the power adapter.

5. The apparatus of claim 4, wherein a gate of the first FET is coupled to a gate of the second FET.

6. An apparatus comprising:
an apparatus of any one of claims 1 to 5;
a voltage converter circuit comprising an input terminal and an output terminal, the input terminal of the voltage converter circuit coupled to the output terminal of the switching circuit;
wherein the first terminal of the battery charging circuit is coupled to the output terminal of the voltage converter circuit;
wherein the input terminal of the bypass circuit is coupled to the output terminal of the voltage converter circuit; and
a further bulk capacitor coupled to the output terminal of the voltage converter circuit and the battery charging circuit.

7. The apparatus of claim 6, further comprising:
a power delivery (PD) controller coupled to the switching circuit.

8. The apparatus of claim 7, further comprising:
an embedded controller coupled to the PD controller and the battery charging circuit.

9. The apparatus of any of claims 6-8, wherein the switching circuit comprises:
a first field-effect transistor (FET) coupled to a second FET, wherein a drain of the first FET is coupled to a Type-C port of the power adapter.

10. The apparatus of claim 9, wherein a gate of the first FET is coupled to a gate of the second FET.

11. A method comprising:
detecting a first voltage level at a power adapter port, the power adapter port coupled to a battery charging circuit via a first communication path, and the power adapter port coupled to a bulk capacitor via a second communication path;
performing a comparison of the first voltage level with a second voltage level available at a terminal of the battery charging circuit; and
enabling a charge boost of the bulk capacitor via the second communication path to cause a reduced inrush current to the bulk capacitor, the enabling based on the comparison, and the charge boost based on power supplied via the battery charging circuit.

12. The method of claim 11, wherein the enabling further comprises:
disabling charging of the battery by the battery charging circuit via a switching circuit coupled to the power adapter port and the battery charging circuit.

13. The method of claim 12, further comprising:
enabling a battery coupled to the battery charging circuit to supply the power during the charge boost, wherein the supply of the power is associated with the reduced inrush current that is smaller than an inrush current prior to enabling the charge boost.

14. Machine-readable storage including machine-readable instructions, when executed, cause a computer to implement the method as claimed in any one of claims 11 to 13.

15. A computer program comprising instructions which, when the program is executed by a computer, cause the computer to carry out the method as claimed in any one of claims 11 to 13.
